# EUROPÄISCHE PATENTANMELDUNG

(11) **EP 2 403 109 A2**
(43) Veröffentlichungstag der Anmeldung: **04.01.2012**
(21) Anmeldenummer: 11005168.7
(22) Anmeldetag: 24.06.2011
(51) Int. Cl.: H02K 1/27, H02K 15/03

(54) **Magnetische Baugruppe, insbesondere für eine elektrische Maschine und Verfahren zur Herstellung einer Baugruppe**

(30) Priorität: 29.06.2010 DE 102010025466; 18.11.2010 DE 102010051858
(71) Anmelder: Schaeffler Technologies GmbH & Co. KG, 91074 Herzogenaurach (DE)
(72) Erfinder: Hill, Wolfgang, 76135 Karlsruhe (DE)

(57) **Zusammenfassung**

Die Erfindung betrifft eine magnetische Baugruppe, insbesondere für eine elektrische Maschine, umfassend mindestens zwei hartmagnetische Segmente zur Erzeugung eines Magnetfeldes und mindestens zwei weichmagnetische Segmente zur Führung des Magnetfeldes, bei welchem die weichmagnetischen Segmente durch eine unmagnetische Haltestruktur zusammengehalten sind.

Um die Baugruppe kostengünstig und in Serienproduktion herstellen zu können, ist ein hartmagnetisches Segment über einen Kontaktspalt an einem weichmagnetischen Segment zu einem ersten Baugruppensegment angeordnet, wobei das erste Baugruppensegment mit einem zweiten Baugruppensegment über einen Toleranzspalt verbunden ist und der Toleranzspalt eine größere Breite als der Kontaktspalt aufweist.

## Beschreibung

Die Erfindung betrifft eine magnetische Baugruppe, insbesondere für eine elektrische Maschine, umfassend mindestens zwei hartmagnetische Segmente zur Erzeugung eines Magnetfeldes und mindestens zwei weichmagnetische Segmente zur Führung des Magnetfeldes, bei welchem die weichmagnetischen Segmente durch eine unmagnetische Haltestruktur zusammengehalten sind sowie ein Verfahren zur Herstellung der Baugruppe.

In elektrischen Maschinen (Elektromotor) werden magnetische Baugruppen verbaut, welche hartmagnetische Segmente aufweisen, die ein Magnetfeld erzeugen. Das Magnetfeld wird dabei von weichmagnetischen (bzw. ferromagnetischen) Segmenten geführt. Solche Baugruppen für elektrische Maschinen, in denen die weichmagnetischen Segmente den von den hartmagnetischen Segmenten erzeugten Magnetfluss zu einer Funktionsfläche führen, sind unter dem Begriff Sammleranordnung bekannt. Dieser Begriff ergibt sich daraus, dass meist die Kontaktfläche eines weichmagnetischen Segmentes zu einem hartmagnetischen Segment größer ist als die Funktionsfläche und die Flussdichte des Magnetfeldes in der Funktionsfläche somit stärker ist als in den hartmagnetischen Segmenten.

Solche Sammleranordnungen sind in vielfältigen Formen bekannt. In einer Bauart werden die, die Sammleranordnung bildenden weichmagnetischen Segmente durch eine unmagnetische Haltestruktur zusammengehalten. Diese Haltestruktur besteht dabei aus einer Verbindungshülse aus unmagnetischem Werkstoff, mit der die weichmagnetischen Segmente durch einen Formschluss verbunden sind. Durch eine solche Anordnung wird ein Streufluss des Magnetfeldes weitgehend vermieden und für die gleiche Magnetflussmenge an den Funktionsflächen ist weniger hartmagnetisches Material erforderlich. Trotz dieser materialsparenden Bauart erfordert die Verbindung der weichmagnetischen Segmente mit einer unmagnetischen Haltestruktur einen höheren Montageaufwand. Weiterhin resultieren daraus geringere mechanische Festigkeiten der Gesamtanordnung sowie höhere Toleranzen. Die weichmagnetischen Segmente werden mit bereits vormagnetisierten hartmagnetischen Segmenten montiert. Dabei ist besonders nachteilig, dass die bereits magnetisierten hartmagnetischen Segmente relativ zu den weichmagnetischen Segmenten bewegt werden müssen. Da sich die hartmagnetischen und die weichmagnetischen Segmente anziehen, entstehen nennenswerte Reibkräfte. Insbesondere, wenn die weichmagnetischen Segmente aus gestapelten, gestanzten Blechen bestehen, ist deren Oberfläche besonders rau ausgebildet. Die hartmagnetischen Segmente benötigen aber, insbesondere wenn es sich um gesinterte Magnete aus einer Seltenen Erden-Eisenlegierung handelt, meist für den Korrosionsschutz eine Beschichtung, welche durch die Reibkräfte, die beim Montieren entstehen, verletzt wird. Neben der Beschädigung der Korrosionsschutzschichten auf den hartmagnetischen Segmenten besteht auch die Gefahr des Abplatzens oder das ferromagnetische Partikel den Montageprozess gefährdet.

Weiter können die anziehenden Kräfte zwischen dem hartmagnetischen Segment und dem weichmagnetischen Segment die Baugruppe verformen. Alle so montierten Segmente weisen Toleranzen auf, die nur sehr aufwändig erfüllt werden können. Die Toleranzen der Einzelsegmente wirken sich durch die bei der Montage wirkenden Magnetkräfte auf die Toleranzen der gesamten Baugruppe aus.

Der Erfindung liegt somit die Aufgabe zugrunde, eine magnetische Baugruppe, insbesondere für eine elektrische Maschine sowie ein Verfahren zur Herstellung der Baugruppe anzugeben, bei welchem trotz kostengünstiger Herstellung der Baugruppe in großen Stückzahlen die Toleranzen der Baugruppe so gering wie möglich gehalten werden und das Risiko der Bauteilbeschädigung minimiert wird.

Erfindungsgemäß wird die Aufgabe dadurch gelöst, dass ein hartmagnetisches Segment über einen Kontaktspalt an einem weichmagnetischen Segment zu einem ersten Baugruppensegment angeordnet ist, wobei das erste Baugruppensegment mit einem zweiten Baugruppensegment über einen Toleranzspalt verbunden ist und der Toleranzspalt eine größere Breite als der Kontaktspalt aufweist. Dies hat den Vorteil, dass durch den Vorhalt des Toleranzspaltes eine Verletzung der Korrosionsschutzschicht der hartmagnetischen Segmente durch Reibung sicher ausgeschlossen wird. Darüber hinaus werden durch den Toleranzspalt die von den einzelnen Bauteilen übertragenen Toleranzen ausgeglichen. Dies geschieht insbesondere auch dann, wenn wirkende magnetische Kräfte zu einer Veränderung der Abstände zwischen den Segmenten führen.

Vorteilhafterweise verläuft der Kontaktspalt zwischen dem weichmagnetischen und dem hartmagnetischen Segment innerhalb des Baugruppensegmentes annähernd konstant. Insbesondere ist der Kontaktspalt mit einem Kontaktmittel versehen. Obwohl sich die weichmagnetischen und die hartmagnetischen Segmente bei Ausbildung des Magnetfeldes anziehen, ist es besonders sicher, wenn ein Kontaktmittel, insbesondere in Form eines Klebemittels oder einer Klebefolie, zwischen diesen beiden Segmenten angeordnet wird. Dies vereinfacht die Montage der beiden Segmente zueinander.

In einer Weiterbildung ist der Toleranzspalt zwischen zwei Baugruppensegmenten in seiner Breite variabel gestaltet. Auch größere Dickentoleranzen der hartmagnetischen Segmente können in der Konstruktion vorgehalten werden, so dass auch bei maximaler Dicke ein kleiner Luftspalt zwischen der hartmagnetischen Seite eines Baugruppensegmentes zur weichmagnetischen Seite des benachbarten Baugruppensegmentes bestehen bleibt, welcher als Toleranzspalt genutzt wird. Dadurch können unterschiedliche Dickentoleranzen bei der Montage vorgehalten werden, was die Konstruktion besonders prozesssicher macht.

In einer Ausgestaltung sind die Baugruppensegmente in Umfangsrichtung um den, einen annähernd kreisförmigen Querschnitt aufweisenden unmagnetischen Haltekörper angeordnet, wobei sich Kontaktspalten des Baugruppensegmentes und Toleranzspalten zwischen den Baugruppensegmenten abwechseln. Dadurch, dass innerhalb der Baugruppensegmente der Kontaktspalt zwischen hartmagnetischem und weichmagnetischem Segment immer minimal ist und der als Toleranzspalt ausgebildete größere Spalt zwischen hartmagnetischem und weichmagnetischem Segment immer an den Baugruppensegmentgrenzen liegt, ergibt sich ein sehr symmetrischer Aufbau, der auch magnetisch wenig Unsymmetrien aufweist.

In einer Variante ist zwischen dem Baugruppensegment und dem unmagnetischen Haltekörper ein Verbindungsspalt ausgebildet, dessen Breite nur unwesentlich größer ist als die Breite des Toleranzspaltes. Durch diesen weiteren Verbindungsspalt werden ebenfalls Toleranzen bei der Montage der aus weichmagnetischen und hartmagnetischen Segmenten gebildeten Baugruppensegmente ausgeglichen.

Zur besseren Befestigung und Halterung der Baugruppensegmente an dem Haltekörper weist der Haltekörper an seinem Umfang, welcher dem Baugruppensegment zugewandt ist, eine strukturierte Kontaktfläche auf.

Vorteilhafterweise weist das weichmagnetische Segment des Baugruppensegmentes und/oder die strukturierte Kontaktfläche des Haltekörpers mindestens einen elastisch verformbaren Vorsprung auf, welcher insbesondere in Richtung des Verbindungsspaltes positioniert ist. Dieser Vorsprung dient als Kontakt für die Anlage der weichmagnetischen Segmente an dem Haltekörper bzw. anders herum, woraus sich eine bessere Positionierung von Haltekörper und weichmagnetischem Segment zueinander ergibt.

Vorteilhafterweise weist das weichmagnetische Segment als Montagehilfe eine Aussparung auf, welche vorzugsweise unrund ausgebildet ist. In diese Aussparung greift während der Montage der Baugruppe eine Montagehilfe ein, die die Baugruppensegmente zueinander positioniert. Insbesondere dadurch, dass die Aussparung abweichend von einer Kreisform ausgebildet ist, ist eine genaue Positionierung der Montagehilfe im weichmagnetischen Segment möglich, was eine besonders exakte Montage der Baugruppensegmente zueinander erlaubt.

Ferner ist die Aussparung, welche durchgängig ausgebildet ist, annähernd mittig auf dem weichmagnetischen Segment angeordnet. Das hat den Vorteil, dass das weichmagnetische Segment sehr exakt zur Funktionsfläche justiert werden kann, wobei die Aussparung den Magnetfluss nicht einschränkt und diesen somit nicht schwächt.

Alternativ ist die Aussparung als Vertiefung am Rand des weichmagnetischen Segmentes ausgebildet. Auch diese Gestaltung verhindert, dass die Aussparung den Magnetfluss vermindert, welcher durch das weichmagnetische Segment gebündelt wird.

Vorteilhafterweise sind der Toleranzspalt und/oder ein Verbindungsspalt zwischen dem Baugruppensegment und dem unmagnetischen Haltekörper und/oder die durchgängige Aussparung des weichmagnetischen Segmentes mit einem ersten Bindemittel ausgefüllt. Dieses Bindemittel kann ein Imprägnierharz, eine Vergussmasse, ein Klebstoff oder ein spritzbarer Kunststoff wie ein Thermoplast oder Duroplast sein. Durch das Bindemittel erhält der Baugruppe seine Stabilität. Werden beispielsweise die durchgängigen Aussparungen der weichmagnetischen Segmente nicht mit dem Bindemittel ausgefüllt und bleiben somit frei, können diese als Kühlkanäle für das Zirkulieren eines Kühlmediums, wie beispielsweise Luft, durch die Baugruppe genutzt werden.

Alternativ ist die durchgängig ausgebildete Aussparung des weichmagnetischen Segmentes mit einem zweiten Bindemittel, insbesondere einem Kunststoff mit einem Faseranteil, verfüllt, wobei das zweite Bindemittel auch die Stirnseiten des weichmagnetischen Segmentes bedeckt. Diese zusätzliche Umhüllung der Baugruppe ermöglicht, dass die durchgängigen Aussparungen des weichmagnetischen Segmentes als Fließkanäle genutzt werden, wobei an ihren Enden Stirnseiten aus Kunststoff gebildet werden. Aufgrund der hier vorliegenden größeren Fließquerschnitte wird ein Kunststoff mit hohem Faseranteil genutzt, der eine hohe Festigkeit vermittelt. Die beiden Stirnseitenflächen sind dabei durch das in den durchgängigen Aussparungen enthaltene zweite Bindemittel miteinander verbunden. Darüber hinaus entsteht auch ein fester Halt zu jedem weichmagnetischen Segment. Dadurch bildet sich ein käfigförmiger Gitterkörper, der an seinen Stirnseiten auch noch weitere Funktionsflächen ausbilden kann. Ein solcher käfigförmiger Gitterkörper weist auch bei thermischen Bewegungen der weichmagnetischen und der hartmagnetischen Segmente sowie des Haltekörpers gegeneinander eine hohe Langszeitstabilität auf. Dadurch werden auftretende Veränderungen und Toleranzen während des Einsatzes der Baugruppe unterbunden.

Eine Weiterbildung der Erfindung betrifft ein Verfahren zur Herstellung einer Baugruppe, insbesondere für eine elektrische Maschine, bei welchem weichmagnetische und hartmagnetische Segmente zu der Baugruppe miteinander verbunden werden. Um trotz kostengünstiger Herstellung der Baugruppe in großen Stückzahlen die Toleranzen der Baugruppe so gering wie möglich zu halten, wird ein weichmagnetisches Segment mit einem unmagnetisierten, hartmagnetischen Segment zu einem Baugruppensegment zusammengefügt, wobei das hartmagnetische Segment nach dem Zusammenfügen zu dem Baugruppensegment magnetisiert wird und anschließend das so hergestellte Baugruppensegment mit weiteren Baugruppensegmenten zu der Baugruppe verbaut wird. Dies hat den Vorteil, dass Montagebewegungen, bei welchen sich das weichmagnetische Segment und das hartmagnetische Segment reibend gegeneinander bewegen, unterbunden werden. Eine Beschädigung der Korrosionsschutzschicht des hartmagnetischen Segmentes wird somit sicher verhindert. Zusätzlich wird eine sehr geringe Positionstoleranz der Funktionsflächen erreicht, auch wenn die einzelnen Segmente, insbesondere die hartmagnetischen Segmente, eine größere Toleranz aufweisen.

Vorteilhafterweise wird das unmagnetisierte hartmagnetische Segment an dem weichmagnetischen Segment positioniert und insbesondere mit einem Kontaktmittel an diesem fixiert. Dieses Kontaktmittel ist vorzugsweise als schnell reagierendes Bindemittel ausgebildet. Die Fixierung muss dabei lediglich für die nachfolgenden Fertigungsvorgänge halten und kann beispielsweise punktförmig durch einen schnell reagierenden anaeroben Klebstoff erfolgen. Nach Abschluss der Montage ist die Fixierung nicht mehr notwendig, da das weich- und das hartmagnetische Segment, welches bereits magnetisiert ist, aufgrund der magnetischen Kräfte aneinander haften.

In einer Weiterbildung greift eine Montagehilfe in eine Aussparung des weichmagnetischen Segmentes von mindestens zwei Baugruppensegmenten ein und die mindestens zwei Baugruppensegmente werden beabstandet zueinander auf einem Kreisbogen anordnet und anschließend die mindestens zwei Baugruppensegmente gleichzeitig radial nach innen bewegt und an einem unmagnetischen Haltekörper positioniert, wodurch der Baugruppe gebildet wird. Durch dieses gleichzeitige Nachinnenführen der Baugruppensegmente wird eine Beschädigung der Korrosionsschutzschichten der hartmagnetischen Segmente zuverlässig verhindert.

In einer Variante weist die Montagehilfe eine verschleißarme Oberfläche auf. Aufgrund der mit einer verschleißarmen Oberfläche gefertigten Montagehilfe kann diese für eine hohe Anzahl von Montagevorgängen genutzt werden und gewährleistet eine sehr exakte Positionierung der Baugruppensegmente.

Um ein Spiel zwischen der Montagehilfe und den Aussparungen der weichmagnetischen Segmente zu vermeiden, umfasst die Montagehilfe mindestens einen Montagestift einer Montagevorrichtung, welcher nach dem Eingreifen in die Aussparung des weichmagnetischen Segmentes in seinem Querschnitt ausgedehnt und nach abgeschlossener Positionierung des Baugruppensegmentes wieder zusammengezogen wird. Jeder Montagestift greift in die Aussparung des weichmagnetischen Segmentes eines Baugruppensegmentes ein. Die hartmagnetischen Segmente werden somit bei der weiteren Montage nicht mehr berührt.

In einer Weiterbildung entstehen nach der Positionierung der Baugruppensegmente zueinander und an dem unmagnetischen Haltekörper Spalte zwischen den Baugruppensegmenten und/oder den Baugruppensegmenten und dem Haltekörper, welche durch ein Bindemittel gefüllt werden. Dieses Bindemittel verleiht der Baugruppe ausreichende Festigkeit gegenüber thermischen Toleranzen.

Die Erfindung lässt zahlreiche Ausführungsformen zu. Zwei davon sollen anhand der in der Zeichnung dargestellten Figuren näher erläutert werden.

Es zeigt:
- Figur 1:: Querschnitt durch ein erstes Ausführungsbeispiel einer als Rotor ausgebildeten Baugruppe
- Figur 2:: Querschnitt und Längsschnitt durch ein zweites Ausführungsbeispiel einer Baugruppe
- Figur 3:: Herstellung der weichmagnetischen Segmente
- Figur 4:: Herstellung eines Baugruppensegmentes
- Figur 5:: Herstellung der Baugruppe aus mehreren Baugruppensegmenten.

Gleiche Merkmale sind mit gleichen Bezugszeichen gekennzeichnet.

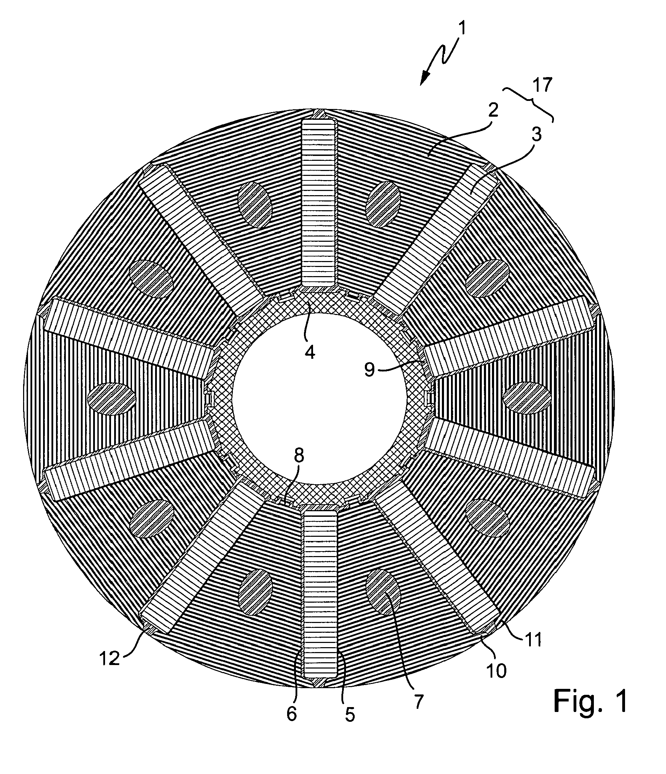

Figur 1 zeigt einen Querschnitt durch eine Baugruppe 1, der einen zehnpoligen Innenläufer einer elektrischen Maschine bildet. Die hartmagnetischen Segmente 3, welche als Dauermagneten ausgebildet sind, sind sternförmig angeordnet und in tangentialer Richtung magnetisiert. Tangential zwischen den hartmagnetischen Segmenten 3 sammeln weichmagnetische Segmente 2 den Magnetfluss und führen ihn radial nach außen zur Mantelfläche, die die Funktionsfläche der zylindrischen Baugruppes 1 darstellt. Die weichmagnetischen Segmente 2 sind in axiale Richtung geblecht und weisen in etwa im Zentrum eine ellipsenförmige Aussparung 7 auf.

Dem Uhrzeigersinn folgend bilden ein hartmagnetisches Segment 3 und ein weichmagnetisches Segment 2 ein Baugruppensegment 17, wobei jedes Baugruppensegment 17 zwischen einem weichmagnetischen Segment 2 und dem hartmagnetischen Segment 3 einen sehr schmalen Kontaktspalt 5 aufweist, welcher als Klebespalt genutzt wird. Der im Uhrzeigersinn auf der anderen Seite jedes Baugruppensegmentes 17 folgende Toleranzspalt 6 zum nächsten Baugruppensegment 17 ist größer ausgebildet als der Kontaktspalt 5 und durch ein Bindemittel, beispielsweise einem Gießharz, gefüllt.

Im Zentrum des durch die weichmagnetischen Segmente 2 und die hartmagnetischen Segmente 3 gebildeten Ringes ist ein Haltekörper 4 angeordnet, der ebenfalls durch das Bindemittel fixiert ist. Dieses Bindemittel füllt auch radial außerhalb und radial innerhalb der hartmagnetischen Segmente 3 liegende Spalten 9 und 12 aus. Der Haltekörper 4 dient als Hülse zum Aufpressen auf eine Welle und besteht aus einem Werkstoff, der keine ferromagnetischen Eigenschaften, also eine sehr geringe Permeabilität aufweist. Die als Haltekörper 4 ausgebildete Hülse weist vorzugsweise eine variable Wandstärke auf, um eine größere Kontaktfläche zum Bindemittel und zu Hinterschnitten auszubilden. Die Hülse ist vorzugsweise als Strangpressteil ausgebildet.

Eine direkte formschlüssige Verbindung der weichmagnetischen Segmente 2 mit dem Haltekörper 4 ist auch denkbar, erfordert aber für kleine Toleranzen an den Funktionsflächen sehr präzise vorgefertigte Teile.

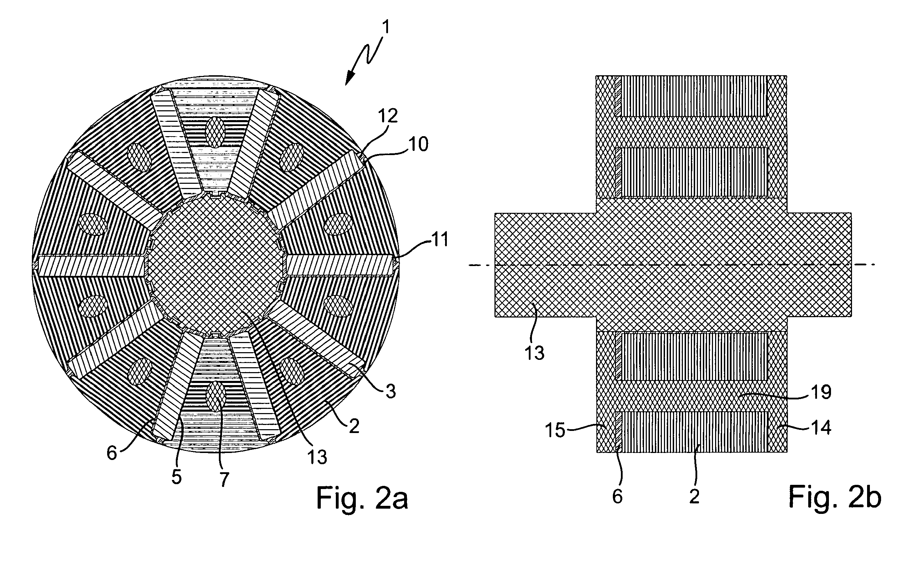

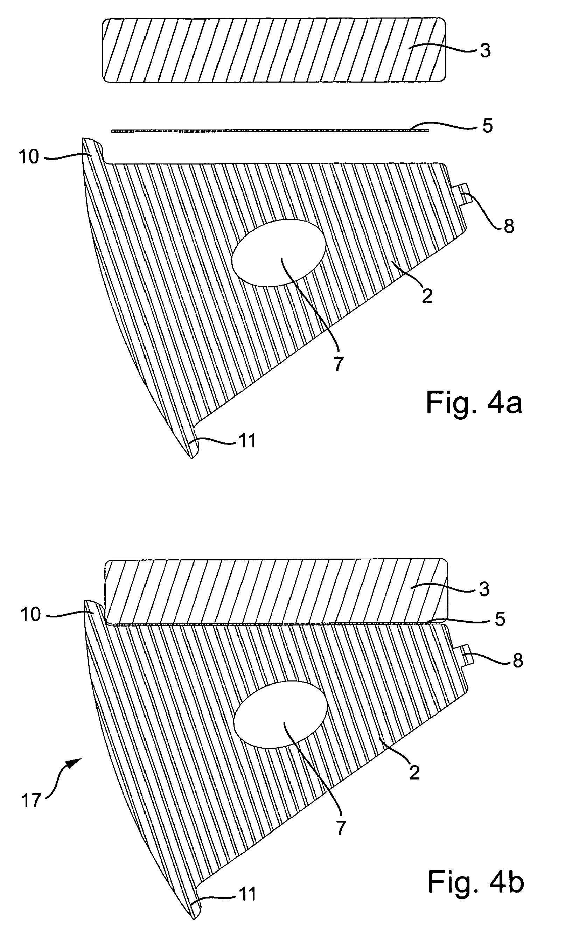

Anstelle einer Hülse kann eine Welle 13 auch direkt vor dem Einbringen des Bindemittels eingesetzt werden, wobei die Baugruppensegmente 17 direkt über das Bindemittel mit der Welle 13 verbunden werden. In diesem Fall weist die Welle 13 vorzugsweise ein Profil auf, das die Kontaktfläche zum Bindemittel vergrößert und Hinterschnitte ausbildet. Eine solche Ausgestaltung ist in Figur 2 dargestellt. Figur 2 zeigt eine magnetische Baugruppe in einem Querschnitt der Figur 4a und in einem Längsschnitt der Figur 4b, wobei die Welle 13 direkt mittig zwischen den Baugruppensegmenten 17 angeordnet ist. In diesem Fall muss die Welle 13 zur Vermeidung von Streuflüssen aus einem Werkstoff mit sehr niedriger Permeabilität (magnetischer Leitwert) bestehen. Ist ein solcher Werkstoff einsetzbar, so kann der Haltekörper 4 als unmagnetischer Adapter eingespart werden.

Im Längsschnitt in der Figur 4b ist erkennbar, dass ein Kunststoff in die Aussparungen 7 der weichmagnetischen Segmente 2 eingespritzt ist, und zwar in der Art, dass die an den axialen Stirnflächen ausgebildeten Kreisscheiben 14 und 15 einstückig miteinander verbunden sind und sich ein Gitterkörper bildet, der aus den beiden Kreisscheiben 14, 15 besteht, die mit einer Anzahl von Stäben miteinander verbunden sind, die sich aus der Polzahl ergeben und der Anzahl der Aussparungen 7 der weichmagnetischen Segmente 2 entsprechen. Der den Gitterkörper bildende Kunststoff ist ein hochfestes Material mit einem hohen Faseranteil, wodurch die gesamte Baugruppe zusätzlich stabilisiert wird.

Obwohl das im Zusammenhang mit Figur 1 erwähnte erste Bindemittel bei geeigneter Auswahl und lunkerarmer Einfüllung in den meisten Fällen bereits alleine eine ausreichende Festigkeit der Baugruppe gewährleistet, bietet der durch die zunächst freigehaltenen Aussparungen 7 ermöglichte Gitterkörper in einem abschließenden Spritzgussvorgang eine zusätzliche Stabilisierung der Baugruppe. In den Stirnseiten kann der angespritzte Gitterkörper auch einen Beitrag zur Drehmomentübertragung leisten oder weitere Funktionen übernehmen.

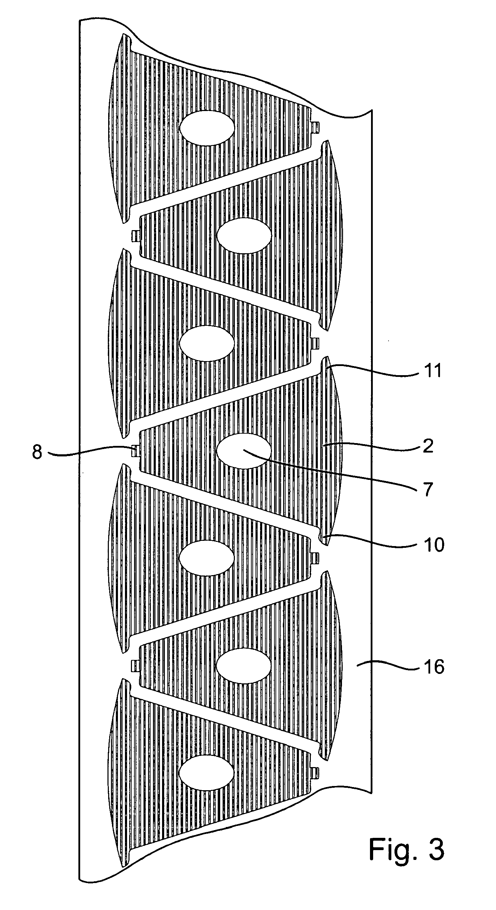

Im Weiteren soll nun die Herstellung der erfindungsgemäßen Baugruppe erläutert werden. Figur 3 zeigt ein Blechband 16, aus welchem die weichmagnetischen Segmente 2 in der vorgegebenen Form als Kreissegment mit der Aussparung 7, Polschuhen 10 und 11 sowie einem Vorsprung 8 ausgestanzt werden. Das Blechband 16 ist dabei vorteilhafterweise als Elektrospaltband ausgeführt. Durch die vorteilhafte Gestaltung der weichmagnetischen Segmente 2 als Kreissegmente kann durch eine geschickte Anordnung der weichmagnetischen Segmente 2 der Verschnittanteil auf ca. 20 % bei einer Spur oder bei mehreren Spuren auf unter 20 % gesenkt werden. In Figur 3 ist beispielhaft nur eine Spur dargestellt.

In Figur 4 wird die Vorfertigung der Baugruppensegmente 17 gezeigt. Hierzu wird ein blockförmiges hartmagnetisches Segment 3 in noch nicht magnetisiertem Zustand durch eine dünne Klebstoffschicht 5, die hier nur symbolisch dargestellt ist, auf eine tangentiale Seite des kreissegmentförmigen, weichmagnetischen Segmentes 2 geklebt. Dabei dient eine als Polschuh 11 ausgebildete Erhebung des weichmagnetischen Segmentes 2 als Anschlag und sorgt dafür, dass das hartmagnetische Segment 3 später im Innenläufer möglichst radial weit außen angeordnet ist. Die beiden Polschuhe 10 und 11 sind vorteilhaft etwas unterschiedlich ausgeführt, wobei der den Anschlag beim Aufkleben bildende Polschuh 11 radial etwas breiter ausgeführt ist als der gegenüberliegende Polschuh 10. Hierdurch wird trotz der unvermeidlichen Toleranzen der weichmagnetischen und hartmagnetischen Segmente 2, 3 eine Berührung von benachbarten Baugruppensegmenten 17 sicher vermieden und es verbleibt im montierten Zustand ein ausreichender Spalt 12. Am radial inneren Ende bildet das weichmagnetische Segment 2 einen Vorsprung 8 aus. Dieser bildet mit Vertiefungen in der äußeren Mantelfläche des Haltekörpers 4 in tangentialer Richtung Hinterschnitte, so dass das Bindemittel bei der Drehmomentübertragung nicht nur auf Scherung, sondern auch auf Druck belastet wird.

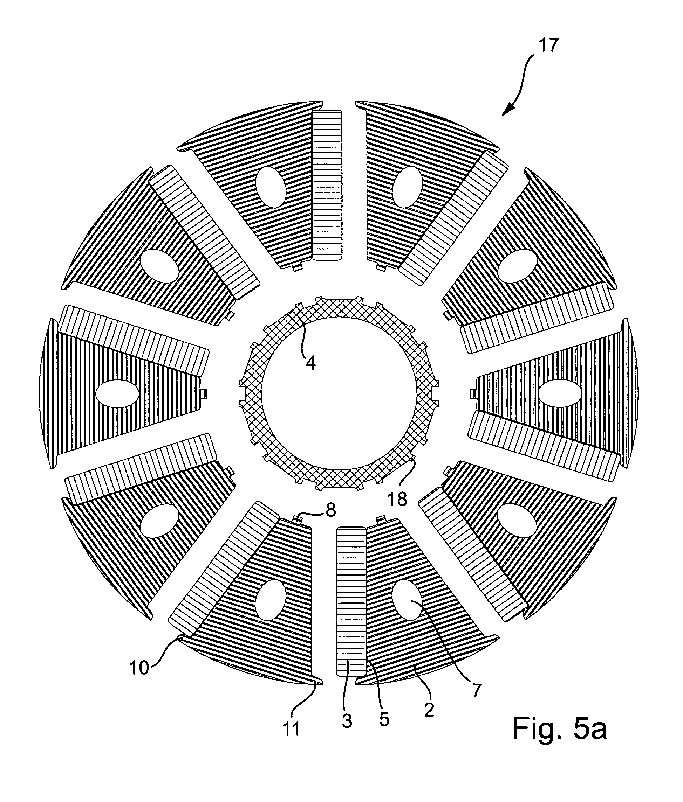

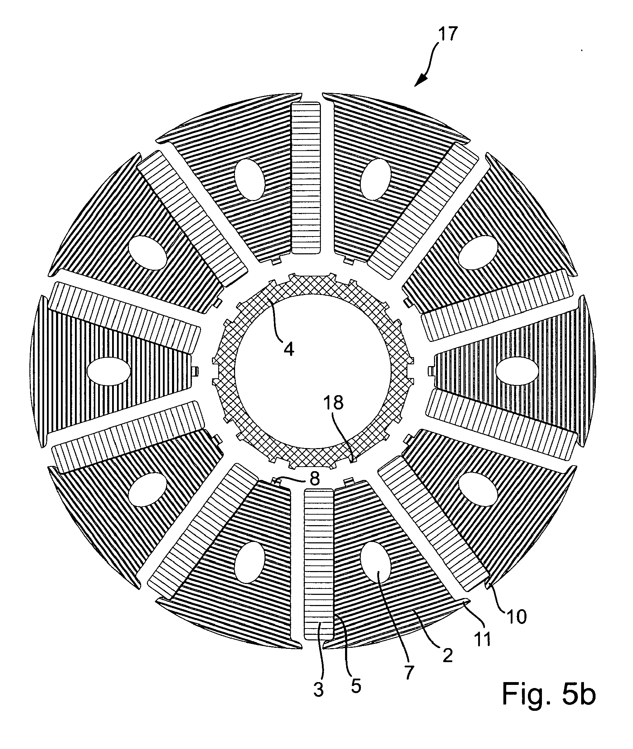

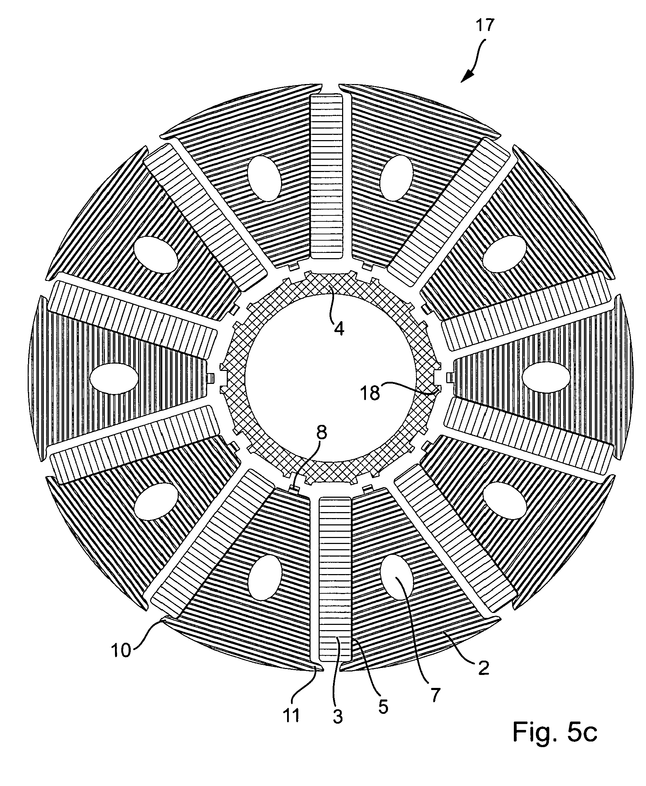

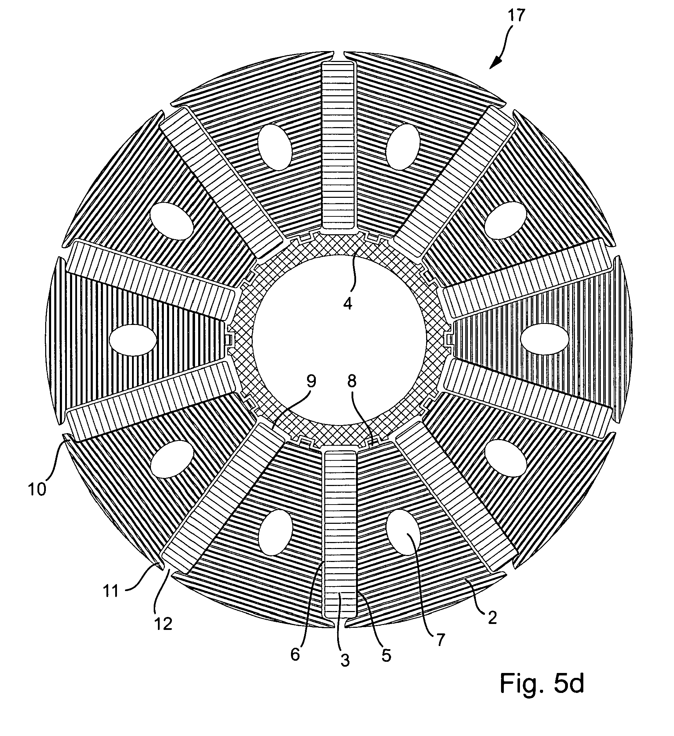

Nach dem Aufkleben des hartmagnetischen Segmentes 3 auf das weichmagnetische Segment 2 wird das hartmagnetische Segment 3 magnetisiert, sobald die dünne Klebstoffschicht 5 ausgehärtet ist. Als Klebstoffschicht 5 wird vorzugsweise ein dünnflüssiger anaerober Klebstoff auf die Oberfläche des hartmagnetischen Segmentes 3 aufgetragen und dann das geblechte weichmagnetische Segment 2 aufgelegt. Unter Luftabschluss reagiert die Klebstoffschicht 5 dann in wenigen Sekunden. In dieser Zeit wird das hartmagnetische Segment 3 von einer Magnetisierspule durch einen Hochstromimpuls aufmagnetisiert. Durch das Magnetisierfeld wird das weichmagnetische Segment 2 sehr fest an das hartmagnetische Segment 3 gepresst und sorgt für eine gute Haftung bei sehr dünnen Klebstoffschichten 5. Die Klebstoffschicht 5 füllt dabei praktisch nur die Unebenheiten des weichmagnetischen Segmentes 2 aus, welches aus Stanzteilen ausgebildet wurde. Nach dem Magnetisieren haftet das hartmagnetische Segment 3 auch durch die Magnetkraft an dem weichmagnetischen Segment 2, so dass die Klebstoffschicht 5 nur eine zusätzliche Fixierung darstellt. Nach dem Magnetisieren wird das hartmagnetische Segment 3 nicht mehr mechanisch berührt. Das so gebildete Baugruppensegment 17 wird stets am weichmagnetischen Segment 2 mechanisch kontaktiert. Vor und vor allem auch nach dem Magnetisieren kann eine Belastung und Beschädigung der Korrosionsschutzschicht auf dem hartmagnetischen Segment 3 sicher vermieden werden. Der Zusammenbau der Baugruppe gemäß Figur 1 wird nun mit Hilfe von Figur 5 erläutert. Die zehn Baugruppensegmente 17 werden zunächst auf einen großen Radius mit Hilfe von nicht weiter dargestellten Montagestiften einer Montageeinrichtung fixiert und positioniert. Je ein Montagestift greift dabei gleichzeitig in je eine Aussparung 7 des weichmagnetischen Segmentes 2 eines Baugruppensegmentes 17 ein. Diese Aussparungen 7 können ein Loch mit einem geschlossenen Rand oder eine Vertiefung am Rand des weichmagnetischen Segmentes 2 sein. Bei der vorliegenden Darstellung wird auf eine durchgängige Öffnung in Form eines Loches zurückgegriffen. Die Montagestifte sind dabei vorteilhafterweise sehr exakt mit einer verschleißarmen Oberfläche gefertigt, so dass sie für eine hohe Anzahl von Montagevorgängen benutzt werden können. Die Montagestifte können aber auch Teil einer Haltestruktur sein, die in der Baugruppe verbleiben und dafür mit geringen Anforderungen an die Verschleißfestigkeit vorzufertigen sind.

Um ein Spiel zwischen den Montagestiften und den Aussparungen 7 der weichmagnetischen Segmente 2 zu vermeiden, können die Montagestifte auch über einen Mechanismus verfügen, der ihren Querschnitt etwas vergrößert und wieder schrumpfen lässt, weshalb die Montagestifte z.B. als Hydrodehndorn oder als Hülse mit partiell dünnen Wandstärken und einem Zuganker ausgeführt sein können. Wesentlich ist, dass die weichmagnetischen Segmente 2 über die Montagestifte exakt bewegt und positioniert werden können.

Die Bildfolge Figur 5a bis Figur 5d zeigt wie die Baugruppensegmente 17 gleichzeitig radial nach innen bewegt werden, vergleichbar mit einem zehnteiligen Backenfutter. In der Endposition verbleibt zwischen allen elf Bauteilen, den zehn baugleichen Baugruppensegmenten 17 und dem Haltekörper 4, ein Verbindungsspalt 9, der aufgrund der unvermeidlichen Fertigungstoleranzen zwischen 0,05 und 0,2 mm schwanken kann. Besonders dünne Toleranzspalte 6 werden zwischen den Baugruppensegmenten 17 angestrebt, während der Verbindungsspalt 9 zwischen den Baugruppensegmenten 17 und dem Haltekörper 4 etwas größer ausfallen kann. In Figur 5d sind die Spalte 6, 9, 12 im Gegensatz zur Figur 1 noch nicht mit einem Bindemittel gefüllt. Das Bindemittel zwischen den Baugruppensegmenten 17 wird nach dem Entfernen der Montagestifte ebenfalls auf Druck belastet, denn die magnetisierten hartmagnetischen Segmente 3 versuchen Spalte zum weichmagnetischen Material zu schließen.

Die angestrebten engen Toleranzen der Anordnung der Funktionsflächen der weichmagnetischen Segmente 2 werden vorteilhaft nur von den präzisen Montagestiften der Fertigungsanlage gewährleistet. In den erläuterten Varianten bleibt zwischen den weichmagnetischen Segmenten 2 und dem Haltekörper 4 bzw. der Welle 13 der Verbindungsspalt 9. Die Abmessungen des Verbindungsspaltes 9 werden nur wenig größer als die des Toleranzspaltes 6 zwischen den Baugruppensegmenten 17 ausgelegt. Durch in etwa konstante Spaltquerschnitte fließt das Bindemittel relativ gleichmäßig in die Baugruppe 1, wodurch eine gute Füllung aller Spalte 6, 9, 12 und der Funktionsfläche erreicht wird.

Durch die spezielle Ausgestaltung der Baugruppe aus hart- und weichmagnetischen Segmenten 2, 3 können die magnetischen Vorteile einer Sammleranordnung genutzt werden. Beim Herstellungsverfahren wird eine reibende Relativbewegung zwischen hart- und weichmagnetischen Segmenten 2, 3 vermieden. Weiter sichert die Ausgestaltung eine sehr symmetrische Anordnung der hartmagnetischen Segmente 3 zueinander und eine sehr enge Toleranz an den Funktionsflächen, indem bei der Herstellung zunächst vor dem Magnetisieren Baugruppensegmente 17, bestehend aus jeweils einem weichmagnetischen Segment 2 und einem hartmagnetischen Segment 3, gebildet werden. Die erfindungsgemäße Lösung ist nicht auf einteilige weichmagnetische und hartmagnetische Segmente beschränkt, sondern umfasst auch Varianten, indem sich die weichmagnetischen oder hartmagnetischen Segmente 2, 3 aus mehreren Teilen zusammensetzen. Anstelle von Blechpaketen können die weichmagnetischen Segmente 2 auch als Pulverpresskerne vorgefertigt werden.

Für elektrische Maschinen ist eine große Vielfalt von Bauarten möglich, sowohl in der Funktion (Außenläufer, Linearmotor, DC-Motor) als auch in der Ausgestaltung der Blechschnitte (z.B. Aussparung tropfenförmig oder mit Öffnung zum Rand). Anstatt einem Haltekörper kann zunächst auch ein Hohlraum vorgehalten werden und der Gitterkörper durch einen den Haltekörper 4 ersetzenden Hohlzylinder ergänzt werden, wodurch im Gitterkörper die Kreisscheiben 14, 15 neben den Stäben 19 auch mit dem Hohlzylinder verbunden werden.

### Bezugszeichenliste

- 1: Baugruppe
- 2: weichmagnetisches Segment
- 3: hartmagnetisches Segment
- 4: Haltekörper
- 5: Kontaktspalt
- 6: Toleranzspalt
- 7: Aussparung
- 8: Vorsprung am weichmagnetischen Segment
- 9: Verbindungsspalt
- 10: Polschuh
- 11: Polschuh
- 12: Spalt zwischen den Polschuhen
- 13: Welle
- 14: Stirnfläche des Gitterkörpers
- 15: Stirnfläche des Gitterkörpers
- 16: Blechband
- 17: Baugruppensegment
- 18: Vorsprung am Haltekörper
- 19: Kunststoffstab

## Patentansprüche

1. Magnetische Baugruppe, insbesondere für eine elektrische Maschine, umfassend mindestens zwei hartmagnetische Segmente (3) zur Erzeugung eines Magnetfeldes und mindestens zwei weichmagnetische Segmente (2) zur Führung des Magnetfeldes, bei welchem die weichmagnetischen Segmente (2) durch eine unmagnetische Haltestruktur (4) zusammengehalten sind, **dadurch gekennzeichnet, dass** ein hartmagnetisches Segment (3) über einen Kontaktspalt (5) an einem weichmagnetischen Segment (2) zu einem ersten Baugruppensegment (17) angeordnet ist, wobei das erste Baugruppensegment (17) mit einem zweiten Baugruppensegment (17) über einen Toleranzspalt (6) verbunden ist und der Toleranzspalt (6) eine größere Breite als der Kontaktspalt (5) aufweist.

2. Magnetische Baugruppe nach Anspruch 1, **dadurch gekennzeichnet, dass** die Baugruppensegmente (17) in Umfangsrichtung um den, einen annähernd kreisförmigen Querschnitt aufweisenden unmagnetischen Haltekörper (4) angeordnet sind, wobei sich Kontaktspalten (5) der Baugruppensegmente (17) und Toleranzspalten (6) zwischen den Baugruppensegmenten (17) abwechseln.

3. Magnetische Baugruppe nach Anspruch 1 oder 2, **dadurch gekennzeichnet, dass** das weichmagnetische Segment (2) als Montagehilfe eine Aussparung (7) aufweist, welche vorzugsweise unrund ausgebildet ist.

4. Magnetische Baugruppe nach mindestens einem der Ansprüche 1, 2 oder 3, **dadurch gekennzeichnet, dass** der Toleranzspalt (6) und/oder ein Verbindungsspalt (9) zwischen dem Baugruppensegment (17) und dem unmagnetischen Haltekörper (4) und/oder die durchgängige Aussparung (7) des weichmagnetischen Segmentes (2) mit einem ersten Bindemittel ausgefüllt ist.

5. Magnetische Baugruppe nach mindestens einem der vorhergehenden Ansprüche 1 bis 4, **dadurch gekennzeichnet, dass** die durchgängig ausgebildete Aussparung (7) des weichmagnetischen Segmentes (2) mit einem zweiten Bindemittel, insbesondere einem Kunststoff mit einem Faseranteil, verfüllt ist, wobei das Bindemittel die Stirnseiten des weichmagnetischen Segmentes (2) bedeckt.

6. Verfahren zur Herstellung einer magnetischen Baugruppe, insbesondere für eine elektrische Maschine, bei welchem weichmagnetische (2) und hartmagnetische Segmente (3) zu der Baugruppe (1) miteinander verbunden werden, **dadurch gekennzeichnet, dass** ein weichmagnetisches Segment (2) mit einem unmagnetisierten, hartmagnetischen Segment (3) zu einem Baugruppensegment (17) zusammengefügt wird, wobei das hartmagnetische Segment (3) nach dem Zusammenfügen zu dem Baugruppensegment (17) magnetisiert wird und anschließend das so hergestellte Baugruppensegment (17) mit weiteren Baugruppensegmenten (17) zu der Baugrupe (1) verbaut wird.

7. Verfahren nach Anspruch 6, **dadurch gekennzeichnet, dass** das unmagnetisierte hartmagnetische Segment (3) an dem weichmagnetischen Segment (2) positioniert und insbesondere mit einem Kontaktmittel an diesem fixiert wird.

8. Verfahren nach Anspruch 6 oder 7, **dadurch gekennzeichnet, dass** eine Montagehilfe in eine Aussparung (7) des weichmagnetischen Segmentes (2) von mindestens zwei Baugruppensegmenten (17) eingreift und die mindestens zwei Baugruppensegmente (17) beabstandet zueinander auf einem Kreisbogen anordnet und anschließend die mindestens zwei Baugruppensegmente (17) gleichzeitig radial nach innen bewegt und an einem unmagnetischen Haltekörper (4) positioniert.

9. Verfahren nach Anspruch 8, **dadurch gekennzeichnet, dass** die Montagehilfe als ein Montagestift einer Montagevorrichtung ausgebildet ist, welcher nach dem Eingreifen in die Aussparung (7) des weichmagnetischen Segmentes (2) in seinem Querschnitt ausgedehnt und nach abgeschlossener Positionierung des Baugruppensegmentes (17) wieder zusammengezogen wird.

10. Verfahren nach Anspruch 8, **dadurch gekennzeichnet, dass** nach der Positionierung der Baugruppensegmente (17) zueinander und an dem unmagnetischen Haltekörper (4) Spalte (6, 9, 12) zwischen den Baugruppensegmenten (17) und/oder den Baugruppensegmenten (17) und dem Haltekörper (4) entstehen, welche durch ein Bindemittel gefüllt werden.
